# EUROPEAN PATENT SPECIFICATION

(11) **EP 1 910 108 B1**
(45) Date of publication and mention of the grant of the patent: **03.03.2010**
(21) Application number: 06757996.1
(22) Date of filing: 27.06.2006
(51) Int. Cl.: B60G 3/28, B60G 11/34, B60G 11/113

(54) **INDIVIDUAL WHEEL SUSPENSION**
EINZELRADAUFHÄNGUNG
SUSPENSION DE ROUE INDIVIDUELLE

(30) Priority: 20.07.2005 SE 0501713
(43) Date of publication of application: 16.04.2008
(73) Proprietor: VOLVO LASTVAGNAR AB, 405 08 Göteborg (SE)
(72) Inventor: PREIJERT, Stefan, S-415 70 Göteborg (SE)
(74) Representative: Fröhling, Werner Otto
(86) International application number: PCT/SE2006/000784
(87) International publication number: WO 2007/011279

(56) References cited:
- EP-A- 1 447 248
- DE-A1- 1 605 917
- DE-A1- 4 313 028
- DE-A1- 4 444 078
- DE-A1- 19 625 018
- GB-A- 2 041 846
- JP-A- 7 052 625
- JP-A- 10 226 210
- US-A- 2 044 196
- US-A- 2 466 832
- US-A- 3 511 493
- US-A- 4 533 157
- US-A1- 2003 034 643

## Description

### TECHNICAL FIELD

The invention relates to an individual wheel suspension for vehicles, especially for commercial vehicles built on a vehicle frame using longitudinal beams.

### BACKGROUND ART

Individual front wheel suspensions currently used in vehicles built on a frame, such as two longitudinal U- or I-profile beams, are often of the McPherson or wishbone type. Such solutions have been difficult to implement without severely intruding into the available space for the engine compartment. One alternative has often been to relocate the engine, as seen in e.g. buses. Examples of known types of individual front wheel suspensions are shown in DE-A1-2918605, DE-A1-4021096, DE-A1-4412145, DE-A1-19515565 and U.S. Pat. No. 4,033,605.

A further problem with currently used wheel suspensions is that they tend to limit the possible ground clearance and/or the choice of engine placement. It is desirable to be able to regulate the height of the vehicle chassis above ground level, while at the same time placing the engine as low as possible, in order to achieve a low centre of gravity and a level floor in the drivers cab. As a rule it is not possible to combine these requirements with the currently used wheel suspensions, in which a sprung, rigid wheel axle extends transversely underneath the frame and the engine.

For instance, EP-A-1 447 248 discloses a rigid axle comprising an air bellows wherein the lower parts of the wheel holders on both sides of the vehicle frame are connected with a rod extending below the leaf springs. An upper part of each wheel holder is attached to a cross member extending between the longitudinal beams of the frame. The cross member is attached to the leaf spring on both sides of the vehicle frame. The assembly of wheel holder and cross member is attached to the longitudinal beams via a shock absorber arranged parallel to the air bellows.

US-A-2 044 196 discloses a wheel suspension comprising a wheel holder attached with its upper end to a leaf spring. A strut rod is attached to the wheel holder at its lower portion. The strut rod extends between the wheel holder and a differential gear on each end of the vehicle frame.

DE-A-1 605 910 discloses an individual wheel suspension whose wheel holder is attached to the vehicle via a shock absorber and arranged at the lower end of the shock absorber. The shock absorber is supported by the leaf spring with a forked section at its lower end.

JP-A-07052626 discloses an individual wheel suspension with a better degree of freedom providing a wheel carrier and a leaf spring. A rotational joint is arranged between the wheel holder and the leaf spring, wherein the wheel holder is embodied as king pin. The leaf spring is employed for a side support with one leg of a forked lower section of the wheel holder arranged in a central section of the leaf spring and the other leg extending to the end of the leaf spring. The leg can be attached to the vehicle or to the leaf spring with a joint. In one embodiment, the wheel holder is connected with the forked lower portion to the leaf spring via bushings, while an upper portion of the wheel holder is connected with a damper. In another embodiment, one leg of the forked lower portion is attached to the leaf spring and the other leg is attached to the vehicle wherein the upper section can be connected to a damper or a rod connected with bushings to the vehicle.

JP 07 232525 A discloses an individual wheel suspension for a vehicle, with a wheel holder for supporting a vehicle wheel, a leaf spring attached to a vehicle frame at each end and attached between the vehicle and the wheel holder. The leaf spring is arranged with its main axis in the longitudinal direction of the vehicle and the wheel holder is arranged in a vertical plane parallel to a vertical plane through the main axis of the leaf spring. An outer end of the wheel holder is arranged to support a vehicle wheel, and that a lower inner end of the wheel holder is rigidly attached to the leaf spring. The wheel suspension is an unsteerable wheel suspension. The upper end of the wheel holder is connected to the frame by a double knee link with a rotational joint between the upper end of the wheel holder and the first and second link rod, wherein the rotational axis is perpendicular to the extension of the leaf spring. The above problems are solved by an improved individual wheel suspension a according to the invention.

### DISCLOSURE OF INVENTION

According to the invention these objects are achieved by a wheel suspension, as claimed in claim 1, and a vehicle provided with such a wheel suspension, as claimed in claim 12.

According to a preferred embodiment, the invention relates to a wheel suspension for a vehicle, which wheel suspension comprises a wheel holder for supporting a vehicle wheel, a leaf spring support attached to a vehicle frame at each end and attached between the vehicle and the wheel holder, which leaf spring is arranged with its main axis in the longitudinal direction of the vehicle. The wheel holder is arranged in a substantially transverse, vertical plane relative to a vertical plane through the main axis of the leaf spring, that an outer end of the wheel holder is arranged to support a vehicle wheel, and that an inner end of the wheel holder is attached to the leaf spring. In the subsequent text, terms such as "inner", "outer", and similar are used with reference to the longitudinal centre axis of the vehicle, unless otherwise specified.

The leaf spring itself may comprise a single leaf spring of a varying cross-section, or comprise a composite leaf spring built up from two or more longitudinal spring sections to produce the desired spring characteristics. In addition, the leaf spring may comprise a central portion having a greater cross-section and relatively thin ends, or a spring having its greatest cross-section at one end. The leaf spring may be attached to a lower surface of the vehicle frame or chassis by any suitable means. The attachment of the leaf spring to the vehicle is not a part of the invention as such, and will not be described in any greater detail.

In addition to the leaf spring, the wheel suspension may also be provided with at least one spring unit attached between the vehicle and the leaf spring. Such a spring unit may be of any suitable type, such as a conventional air spring, also termed bellows. The suspension may also include a combination of dampers, for example a pneumatic damper or bellows and a pneumatic or hydraulic shock absorber, for instance a McPherson strut. Dampers and/or shock absorbers may be attached to the leaf spring and wheel holder by conventional means, which will not be described in further detail here. The following text will only describe possible locations of the wheel holder and a spring unit relative to the leaf spring. A pneumatic damper has been selected as a typical example, but the wheel suspension is not limited to use with this damper.

A lower section of the inner end of the wheel holder is rigidly attached to the leaf spring. The said inner end of the wheel holder is terminated adjacent or a short distance inside the inner longitudinal side surface of the leaf spring. Consequently, the inner end of the wheel holder may extend approximately to or a short distance past a vertical plane through the inwardly facing end surfaces of the longitudinal beams making up the frame of the vehicle.

According to one embodiment, the wheel holder is rigidly attached to the leaf spring adjacent a spring unit by means of suitable fastening elements. A fastening element may be arranged as a pair of U-shaped clamp sections placed transversely over the leaf spring and down on either side of the inner end of the wheel holder. The clamp then continues in a further pair of U-shaped clamp sections placed in a longitudinal direction under the inner end of the wheel holder. Depending on the load to be taken up by the wheel holder, single or double clamps may be used. The extension of the inner end of the wheel holder must be sufficient to allow the inner section of the fastening element to be fixed around said inner end.

A wheel holder comprising a single inner end may be rigidly attached to the leaf spring on either side of a spring unit. The location of the inner end of the wheel holder, to the front or the rear of the spring unit, may be dependent on factors such as the spring characteristics of the leaf spring, the load to be taken by the leaf spring and wheel holder assembly and available space for mounting the wheel holder. Further factors may be if the associated wheel is a front wheel, that may be steerable, or a non-driven rear wheel, that may be attached to a pusher or tag axle.

According to one embodiment, a wheel holder comprising a forked or wishbone-shaped inner end may be rigidly attached to the leaf spring in two positions, e.g. on both sides of a spring unit. This solution will give the wheel holder increased stability in the longitudinal direction, for instance when subjected to braking forces, as well as in the transverse direction, for instance when subjected to a rolling moment. The wheel holder will also be able to take higher loads, being attached to the leaf spring by an additional clamp.

Alternatively, the wheel holder may comprise a forked or wishbone-shaped inner end rigidly attached to the leaf spring in one position, e.g. on one side of a spring unit and attached by means of a pivoting or resilient means, such as a ball joint, on the other side. According to a further alternative, the wheel holder may comprise a single inner end that is rigidly attached to the leaf spring on either side or under the spring unit.

The wheel holder may extend from its lower, inner end outwards in a generally horizontal direction, followed by a curved section extending upwards to a position generally level with, or slightly below, a horizontal plane through the upper surface of the adjacent longitudinal beam of the vehicle frame. An upper section of the wheel holder may be attached to the vehicle by a single guide rod, extending in a substantially transverse direction from a pivot joint attached the upper surface of said longitudinal beam to a pivot joint at the upper end of the upper section of the wheel holder.

The transverse, single guide rod may be attached to the frame and the wheel holder by pivot joints in the form of ball joints or equivalent joints or bushings. Wind-up, caused by longitudinal forces as a result of, for instance, a braking moment applied by the associated wheel, will mainly be counteracted by the leaf spring. This may cause the section of the leaf spring to which the wheel holder is attached to twist a few degrees around a substantially transverse axis through the point of attachment of the wheel holder. The resulting movement of the upper section of the wheel holder is allowed but also counteracted by the transverse, single guide rod and its pivot joints. Apart from the normal, vertical movement of the wheel holder, the single guide rod will restrict the upper end of the wheel holder to move along a relatively small arc determined by a radius described by the outer end of the guide rod with its locus at its inner pivot joint. In combination, this arrangement will reduce both brake steer, caused by a brake moment twisting the wheel holder around a vertical axis, and bump steer, caused by forces induced into the wheel holder by a wheel travelling across an uneven surface.

Alternatively an upper section of the wheel holder is attached to the vehicle by a wishbone guide rod extending in a substantially transverse, horizontal direction. When seen in a plan view, the wishbone guide rod may be V-shaped with its ends extending outwards from a pair of longitudinally separated pivot joints attached the upper surface of said longitudinal beam with its apex attached to a pivot joint at the upper end of the upper section of the wheel holder.

The wishbone guide rod may be attached to the frame by a pair of pivot joints located along a common horizontal axis. The pivot joints may include rubber bushings. The apex of the wishbone guide rod may be attached to the wheel holder by a similar pivot joint, or by a ball joint as used by the single guide rod described above. In this case, wind-up will be counteracted by both the leaf spring and the wishbone guide rod, as the latter is fixed against rotation by its inner pair of pivot joints. Hence the twisting movement of the leaf spring caused by, for instance, a braking moment will be reduced. When used for a steerable front wheel, this arrangement substantially reduces both brake steer and bump steer, as defined above.

The purpose of the single or the wishbone guide rod is to control the vertical movement of the wheel holder and, albeit to a lesser degree, take up forces in the longitudinal direction of the vehicle.

The wishbone guide rod will give a progressive effect not only during roll around a longitudinal axis, but also for wind-up, as it is locked against rotation. Hence the wishbone guide rod may replace a transverse stabilizer bar. In order to maintain a progressive effect when the vehicle is carrying a heavy load, or when the spring approaches its maximum allowable deflection, a bump stop may be required.

The arrangement makes it possible to control camber and changes in the track width through the entire suspension range and under varying loads. It is particularly advantageous to use the leaf springs for taking up large loads during braking, since this gives a lower bending moment on the vehicle frame, compared to the traditional angled linkages normally used for individual suspensions.

The wheel holder described in the above embodiments is preferably, but not necessarily, attached to the leaf spring at or near the greatest cross-section thereof. At this location the leaf spring will display substantially no, or at least very little, spring movement, which reduced the loading on the attachment means holding the leaf spring and wheel holder.

According to a preferred embodiment, the wheel holder is a king post provided with wheel spindle holder for a steerable wheel. In this case, the invention may provide an individual front wheel suspension that allows the elimination of longitudinal reaction rods and a transverse stabilizer. The result is a very compact wheel suspension that does not intrude into the available space for the engine compartment, as it lacks a sprung, rigid front or rear axle, respectively. For a front suspension, this allows the engine to be lowered, resulting in a lower centre of gravity and allows a planar floor in the driver's cab without having to raise the cab higher above ground level.

The king post may be manufactured as a single forged part, but can also be assembled from two or more parts that are welded and/or bolted together. The outer section of a king post according to the invention may be provided with a standard spindle for supporting a vehicle wheel.

The steering arm is preferably, but not necessarily curved in a substantially horizontal plane, from its attachment point on the wheel spindle, around the upright section of the king post, to be attached to the rear end of a steering linkage positioned between the king post and the frame. The steering linkage may comprise a steering rod extending longitudinally from a position laterally inside the king post, or a short distance in from of the king post, towards a pitman arm attached to a steering gear located on the frame a predetermined distance in front of the king post.

The steering gear on one side of the frame may be connected to a slave steering gear by means of a transverse axle preferably, but not necessarily passing through a cut-out opening through each of the longitudinal beams making up the frame. The slave steering gear is located on the opposite side of the vehicle frame, where it is connected to the opposite king post by means of an identical, or substantially identical, but inverted steering linkage. Instead of a mechanical linkage, the steering linkages or steering arms may also be actuated by hydraulic or electric actuators controlled by signals from an electronic control unit in response to a steering input from the vehicle steering wheel.

According to a further embodiment, the wheel holder is provided with a hub for a non-driven, rear wheel. Such a solution may be suited for certain types of rear axles, such as a pusher axle, located immediately in front of a rear drive axle, or a tag axle, which can be raised or lowered. For a pusher axle, this allows the drive line to pass by a pusher axle without requiring the axle to be offset. In both cases, weight may also be saved by eliminating the transverse axle.

A vehicle suspension of this type may also be arranged to allow for lowering and raising the vehicle relative to the ground level, for instance when a load carrying vehicle is lowered to release and unload a container. Any such lowering or raising operation will be counteracted by the leaf springs, but the wheel suspension may be modified by suitable means to overcome the spring force of said leaf springs to allow the level of the chassis to be adjusted over a relatively large range.

The invention further relates to a vehicle provided with a wheel suspension as described above.

### BRIEF DESCRIPTION OF DRAWINGS

The embodiments of the description will be described with reference to the enclosed schematic drawings, of which;
- Figure 1: shows a front perspective view of the wheel suspension according to the invention;
- Figure 2: shows the wheel suspension according to Figure1, where the longitudinal beams have been removed for clarity;
- Figure 3: shows a front view of the wheel suspension;
- Figure 4: shows a plan view of a first embodiment of the wheel suspension;
- Figure 5: shows a plan view of a second embodiment of the wheel suspension;
- Figure 6: shows a side view of the wheel suspensions of Figures 4 and 5;
- Figure 7: shows a side view of a further embodiment of the wheel suspension.

### EMBODIMENTS OF THE INVENTION

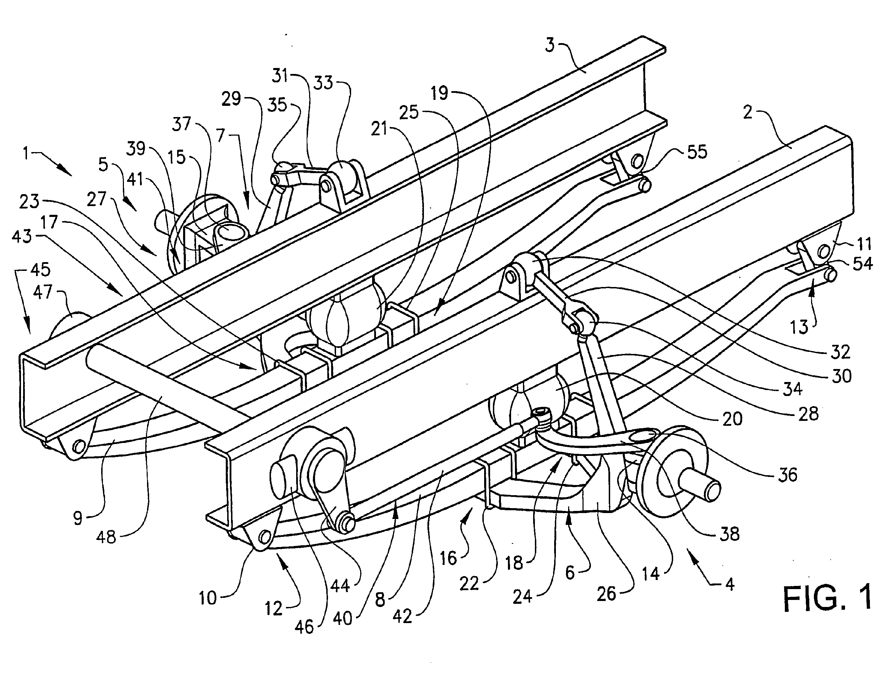

Figure 1 shows a front perspective view of the wheel suspension according to the invention. As shown in the figure, a vehicle frame 1 comprising two substantially parallel beams 2, 3 is provided with an individual wheel suspension 4, 5 on either side of the vehicle. In the subsequent text only one wheel suspension will be described, unless stated otherwise. The wheel suspension 4, 5 comprises a wheel holder 6, 7 for supporting a vehicle wheel (not shown). A leaf spring 8, 9 is attached to a lower surface of each beam 2, 3, which leaf spring 8, 9 is arranged with its main axis in the longitudinal direction of the vehicle. In this example, the leaf spring comprises a single leaf of a varying cross-section, wherein a central portion has a greater cross-section while its ends are relatively thin. The leaf spring 8, 9 is attached to the beam 2, 3 by attachment means 10, 11 located at each end of the leaf spring. A front end 12 of the leaf spring 8, 9 is mounted in a fixed but pivotable position relative to the beam 2, 3, while a rear end 13 is mounted displaceable and pivotable relative to the beam 2, 3 via spring shackles 54, 55 in order to allow for length adjustment during deflection of the leaf spring.

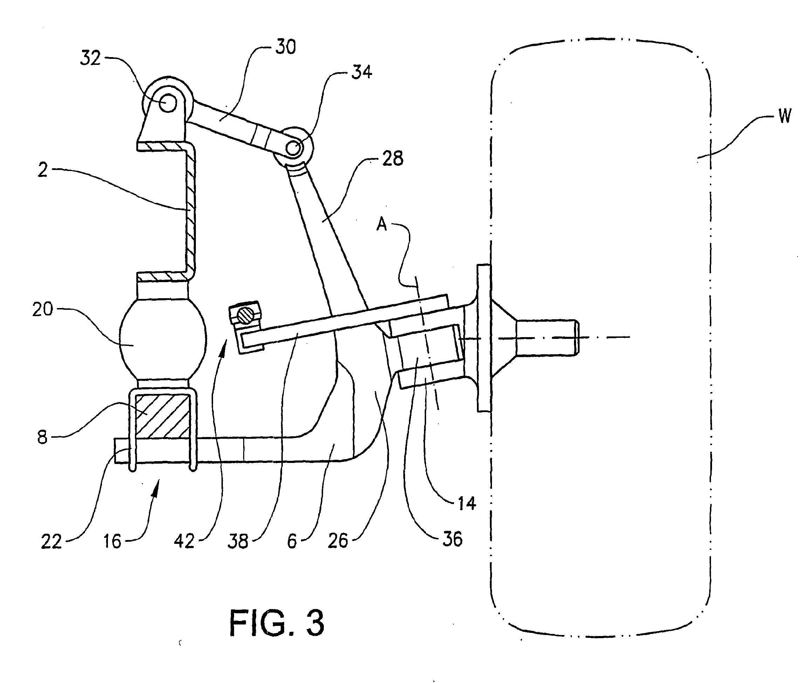

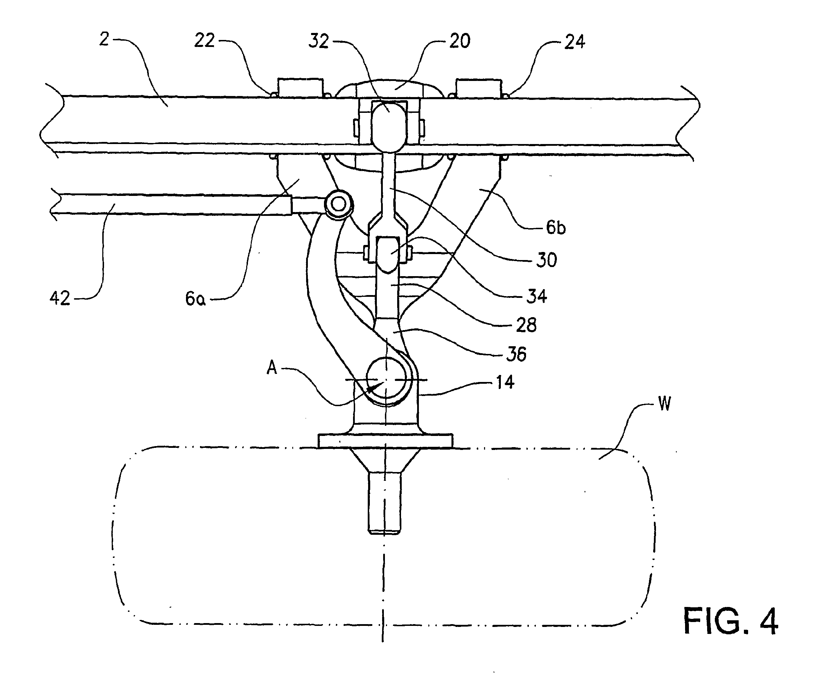

The leaf spring 8, 9 is mounted between the beam 2, 3 and a wheel holder, which in this embodiment is a king post 6, 7. The king post 6, 7 is arranged in a substantially transverse, vertical plane relative to a vertical plane through the main axis of the leaf spring (see Figure 4). An outer end of the king post 6, 7 is arranged to support a wheel spindle 14, 15 and a vehicle wheel (as indicated in Figures 3 and 4). An inner, lower section of the king post 6, 7 is attached to the leaf spring 8, 9 at two longitudinally separate attachment points 16, 17; 18, 19.

The inner, lower section of the king post 6, 7 is forked and rigidly attached to the leaf spring on either side of a spring unit 20, 21. The said inner end of the king post is terminated a short distance inside the inner longitudinal side surface of the leaf spring 8, 9. A fastening element 22, 23; 24, 25 is provided at each attachment point 16, 17; 18, 19, which fastening element comprises a pair of U-shaped clamp sections placed transversely over the leaf spring 8, 9 and down on either side of each inner, lower end of the king post 6, 7. The clamp then continues in a further pair of U-shaped clamp sections placed in a longitudinal direction under the inner end of the king post. The spring unit 20, 21 is attached between the beam 2, 3 and the leaf spring 8, 9 at the central section of said leaf spring.

The spring unit used in this example is a conventional air spring, also termed air bellows. However, depending on the shape and stiffness selected for the spring and the total load to be taken up by the suspension it may also be possible to use a leaf spring only.

The king post 6, 7 extends from its inner, lower end outwards in a generally horizontal direction, followed by a curved section 26, 27 extending upwards to a position generally level with, or slightly below, a horizontal plane through the upper surface of the adjacent longitudinal beam 2, 3. An upper section 28, 29 of the wheel holder is attached to the beam 2, 3 by a single guide rod 30, 31, extending in a substantially transverse direction from a first pivot joint 32, 33 attached to the upper surface of said longitudinal beam to a second pivot joint 34, 35 at the upper end of the upper section 28, 29 of the king post 6, 7. In this example, the pivot joints are ball joints.

The king post 6, 7 is provided with a wheel spindle holder 36, 37 for a steerable wheel (not shown). The wheel spindle holder 36, 37 is provided with a steering arm 38, 39 that is curved in a substantially horizontal plane, from its attachment point on a wheel spindle 14, 15, passing around the upper section of the king post, to be attached to the rear end of a steering linkage 40, 41 positioned between the king post 6, 7 and the beam 2, 3. The steering linkage comprises a steering rod 42, 43 extending longitudinally from a position laterally inside the king post towards a pitman arm 44, 45 attached to a steering gear 46 located on the frame a predetermined distance in front of the king post. The steering gear 46 connected to a slave steering gear 47 by means of a transverse axle 48 passing through a cut-out opening (not shown) through each of the longitudinal beams 2, 3 making up the frame. The slave steering gear is located on the opposite side of the vehicle frame, where it is connected to the opposite king post by means of an identical but inverted steering linkage.

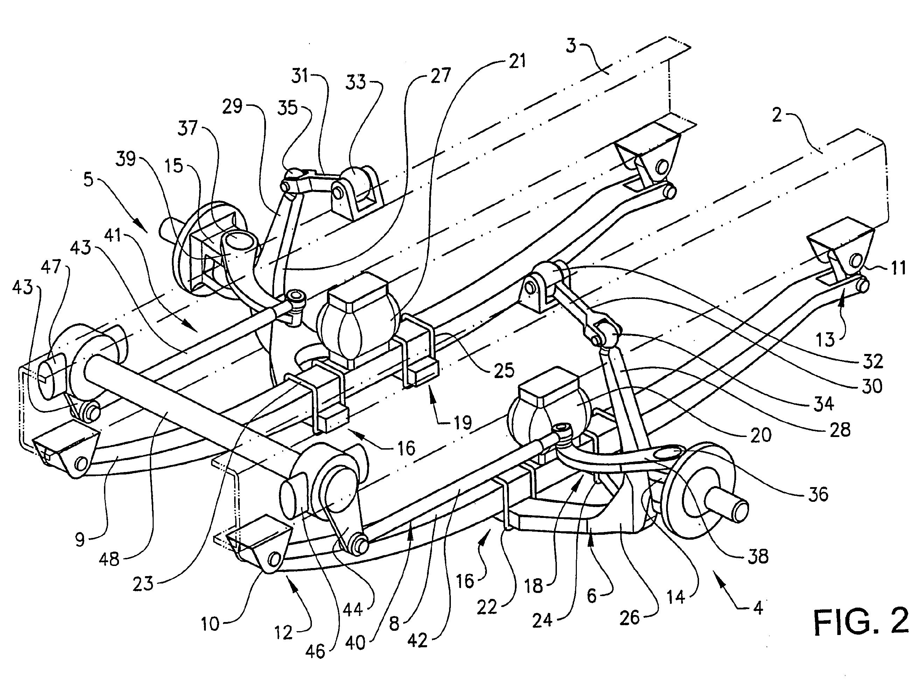

Figure 2 shows the wheel suspension as described in connection with Figure 1, but where the longitudinal beams have been removed for clarity. The reference numerals are identical to those used above. In Figure 2, the location of a number of components, such as the slave steering gear 47, that are hidden by the said beams in Figure 1 are clearly shown.

Figure 3 shows a front view of the wheel suspension of Figure 1, taken as a cross-section through the frame in front of the king post. The figure shows a section through the near-side beam 2 and leaf spring 8 of Figure 1. As can be seen from the figure, the lower, inner end of the king post 6 is clamped to the leaf spring 8 at the attachment point 16 by means of the fastening element 22 described above. The lower part of the spring unit 20 is attached to the leaf spring 8 behind said attachment point, at a location substantially half way between the front and rear attachment points 16, 18 of the forked inner, lower section of the king post 6 (see Figure 4). The upper side of the spring unit 20 is attached to the lower surface of the beam 2.

The outer end of the king post 6 is arranged to support a wheel spindle 14 and a vehicle wheel W (indicated with dashed lines). The wheel spindle 14 is attached to the wheel spindle holder 36 that is a part of the curved section 26 of the king post extending upwards to a position generally level with a horizontal plane through the upper surface of the beam 2. The upper section 28 of the king post is attached to the beam 2 by a single guide rod 30, extending in a transverse direction from a first pivot joint 32 attached to the upper surface the beam to a second pivot joint 34 at the upper end of the upper section 28 of the king post 6. The transverse, single guide rod 30 is attached to the beam and the king post by ball joints. The figure also indicates the position of the steering arm 38 attached to the wheel spindle 14.

The inner end of the steering arm 38 is attached to the forwardly extending steering rod 42, indicated as a hatched section. Actuation of the steering arm, through the steering rod, will cause the wheel spindle to rotate around an axis A through the wheel spindle 14 and the wheel spindle holder 36. This axis A is located in a transverse plane relative to the longitudinal axis of the vehicle, but at a slight angle inwards and upwards relative to a vertical plane at right angles to said transverse plane. This wheel spindle angle is exaggerated in Figure 3.

Figure 4 shows a plan view of a first embodiment of the wheel suspension, as shown in Figures 1 and 3. This figure clearly shows the forked shape of the lower, inner end of the king post 6. This inner end is divided into a first inner end 6a, located in front of the spring unit 20, and a second inner end 6b, located to the rear of the said spring unit 20. In addition, the figure indicates to location of the single guide rod 30, extending in a transverse plane that substantially coincides with the axis A of the wheel spindle 14. Consequently the first pivot joint 32, attached to the upper surface of the beam 2, and the second pivot joint 34, attached to the upper end of the upper section 28 of the king post 6 are also located in this transverse plane.

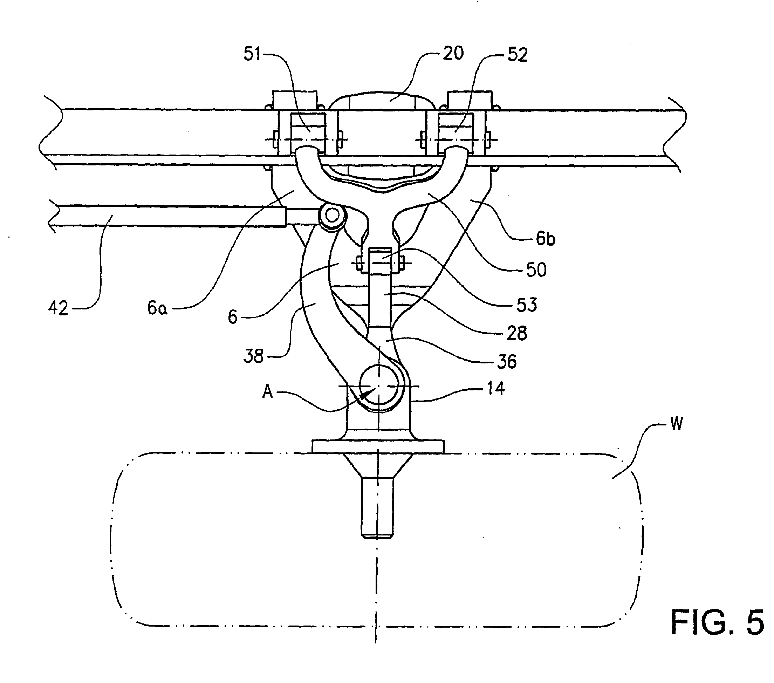

Figure 5 shows a plan view of a second embodiment of the wheel suspension according to the invention. This embodiment is provided with a king post 6 having a forked shape at its lower, inner end, as described in connection with Figure 4 above. This inner end is divided into a first inner end 6a, located in front of the spring unit 20, and a second inner end 6b, located to the rear of the said spring unit 20. However, the guide rod connecting the upper section 28 of the king post 6 to the beam 2 is a wishbone guide rod 50. The wishbone guide rod 50 is attached to the beam 2 by a pair of pivot joints 51, 52 located spaced apart along a common horizontal axis parallel with the beam 2. The pivot joints include rubber bushings (not shown). The wishbone guide rod 50 is attached to the upper section 28 of the king post 6 at its apex of the by a ball joint 53, as used by the single guide rod described in connection with Figure 3 above.

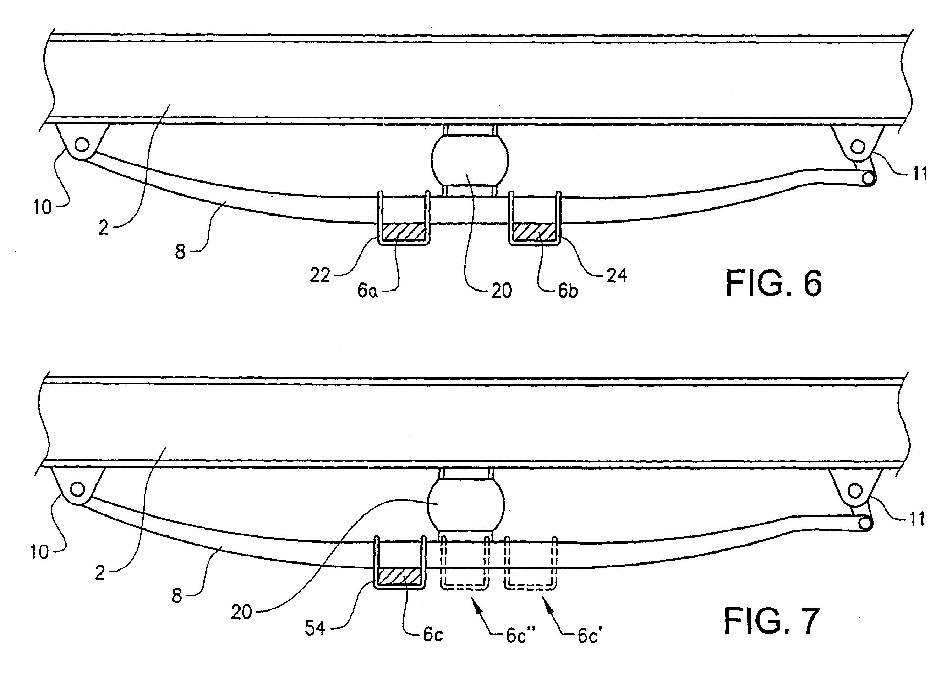

Figure 6 shows a side view of the wheel suspension leaf spring adjacent the attachment point of the king post as described in Figures 4 and 5. The figure shows a cross-section through the forked ends 6a, 6b of the king post in a vertical plane parallel to the longitudinal beam 2. As can be seen from the figure, the respective front and rear lower, inner end 6a, 6b are attached to the leaf spring 8 by means of clamps 22, 24, respectively, on either side of the spring unit 20.

Figure 7 shows a side view of a further embodiment of the wheel suspension. The embodiments of Figures 1-6 all show a king post having a forked lower, inner end attached on either side of a spring unit. However, the invention may also be applied to a king post having a single, unitary lower, inner end 6c, 6c', 6c". The inner end 6c is attached to the leaf spring 8 using the same type of clamp 54 described. As indicated with dashed lines, the inner end 6c' can also be located to the rear of the spring unit 20, be arranged to coincide with the location of the spring unit 20. In the latter case, the inner end 6c" is clamped to the leaf spring 8 underneath the spring unit attachment. When a single inner end is used to attach the wheel holder, the width of the inner end of the wheel holder is preferably extended for greater stability.

Although the above embodiments show a wheel holder in the form of a king post, the invention can also be applied to axles for non-driven rear wheels, such as a pusher axle or a tag axle. The main difference between a suspension for a rear axle and the embodiments of Figures 1-5 is that the spindle holder would be replaced by a fixed, non-steerable wheel hub. Consequently, the steering arm and steering linkage would not be required.

The invention is not limited to the above embodiments, but may be varied freely within the scope of the claims.

## Claims

1. An individual wheel suspension (4, 5) for a vehicle, which wheel suspension (4, 5) comprises a wheel holder (6, 7) for supporting a vehicle wheel, a leaf spring (8, 9) attached to a vehicle frame (1) at each end (12,13) and attached between the vehicle and the wheel holder (6, 7), which leaf spring (8, 9) is arranged with its main axis in the longitudinal direction of the vehicle, wherein an outer end of the wheel holder (6, 7) is arranged to support a vehicle wheel and a lower inner end (6a, 6b, 6c, 6c', 6c") of the wheel holder (6, 7) is rigidly attached to the leaf spring (8, 9), **characterized in that** the wheel holder (6, 7) is arranged in a substantially transverse, vertical plane relative to a vertical plane through the main axis of the leaf spring (8, 9), wherein the wheel holder (6, 7) extends from its lower, inner end (6a, 6b, 6c, 6c', 6c") outwards in a generally horizontal direction, followed by a curved section (26, 27) extending upwards to a position generally level with, or slightly below, a horizontal plane through the upper surface of the adjacent longitudinal beam (2) of the frame (1) and wherein an upper section (28) of the wheel holder (6, 7) is attached to the vehicle by a single-rod guide rod (30, 31) or wishbone guide rod (50) extending in a substantially transverse direction from a pivot joint (32; 51, 52) attached to the upper surface of said longitudinal beam (2) to a pivot joint (34; 53) at the upper end of the upper section (28) of the wheel holder (6, 7).

2. Wheel suspension according to claim 1, **characterized in that** a lower section of the inner end (6a, 6b, 6c, 6c'. 6c) of the wheel holder (6, 7) comprises a forked section that is attached to the leaf spring (8, 9) on either side of a central section of said leaf spring (8, 9).

3. Wheel suspension according to claim 1, **characterized in that** a single lower section of the inner end (6a, 6b, 6c, 6c', 6c) of the wheel holder (6, 7) is attached to the leaf spring (8, 9) adjacent a central section of said leaf spring (8, 9).

4. Wheel suspension according to claim 1, **characterized in that** the wheel holder (6, 7) is attached to the leaf spring (8, 9) at or near the greatest cross-section thereof.

5. Wheel suspension according to claim 1, **characterized in that** at least one spring unit () is attached between the vehicle frame (1) and the leaf spring (8, 9).

6. Wheel suspension according to claim 5, **characterized in that** a lower section of the inner end (6a, 6b, 6c, 6c', 6c) of the wheel holder (6, 7) is attached to the leaf spring (8, 9) adjacent the spring unit (20, 21).

7. Wheel suspension according to claim 6, **characterized in that** a lower section of the inner end (6a, 6b, 6c, 6c'. 6c) of the wheel holder (6, 7) is attached to the leaf spring (8, 9) on both sides of the spring unit (20, 21).

8. Wheel suspension according to claim 1, **characterized in that** the wheel holder (6, 7) is a king post provided with wheel spindle holder (36, 37) for a steerable wheel.

9. Wheel suspension according to claim 1, **characterized in that** the wheel holder (6, 7) is provided with wheel hub for a non-driven rear wheel.

10. Vehicle provided with a wheel suspension (4, 5) according to claim 1.

## Patentansprüche

1. Einzelradaufhängung (4, 5) für ein Fahrzeug, wobei die Radaufhängung (4, 5) einen Radhalter (6, 7) für die Lagerung eines Fahrzeugrades und eine Blattfeder (8, 9) umfasst, die an einem Fahrzeugrahmen (1) an jedem Ende (12, 13) befestigt und zwischen dem Fahrzeug und dem Radhalter (6, 7) befestigt ist, wobei die Blattfeder (8, 9) mit ihrer Hauptachse in Längsrichtung des Fahrzeugs angeordnet ist, wobei ein äußeres Ende des Radhalters (6, 7) zur Lagerung eines Fahrzeugrades angeordnet ist und ein niedrigeres inneres Ende (6a, 6b, 6c, 6c', 6c") des Radhalters (6, 7) fest an der Blattfeder (8, 9) befestigt ist,
**dadurch gekennzeichnet, dass** der Radhalter (6, 7) in einer bezüglich einer vertikalen Ebene durch die Hauptachse der Blattfeder (8, 9) im Wesentlichen quer verlaufenden vertikalen Ebene angeordnet ist, wobei der Radhalter (6, 7) sich von seinem niedrigeren, inneren Ende (6a, 6b, 6c, 6c', 6c") nach außen in einer im Wesentlichen horizontalen Richtung erstreckt, gefolgt von einem gekrümmten Abschnitt (26, 27), der sich nach oben zu einer Stelle erstreckt, die insgesamt auf Höhe oder leicht unterhalb einer horizontalen Ebene durch die obere Oberfläche des angrenzenden Längsträgers (2) des Rahmens (1) erstreckt, und wobei ein oberer Abschnitt (28) des Radhalters (6, 7) an dem Fahrzeug durch eine einstängige Führungsstange (30, 31) oder eine Wünschelruten-Führungsstange (50) befestigt ist, die sich in einer im Wesentlichen quer verlaufenden Richtung von einem an der oberen Oberfläche des Längsträgers (2) angebrachten Zapfengelenk (32, 51, 52) zu einem Zapfengelenk (34, 53) an dem oberen Ende des oberen Abschnitts (28) des Radhalters (6, 7) erstreckt.

2. Radaufhängung nach Anspruch 1, **dadurch gekennzeichnet, dass** ein niedrigerer Abschnitt des inneren Endes (6a, 6b, 6c, 6c', 6c") des Radhalters (6, 7) einen gegabelten Abschnitt umfasst, der an der Blattfeder (8, 9) beidseitig eines Mittelabschnitts der Blattfeder (8, 9) befestigt ist.

3. Radaufhängung nach Anspruch 1, **dadurch gekennzeichnet, dass** ein einzelner niedrigerer Abschnitt des inneren Endes (6a, 6b, 6c, 6c', 6c") des Radhalters (6, 7) an der Blattfeder (8, 9) angrenzend an einen Mittelabschnitt der Blattfeder (8, 9) befestigt ist.

4. Radaufhängung nach Anspruch 1, **dadurch gekennzeichnet, dass** der Radhalter (6, 7) an der Blattfeder (8, 9) an oder in der Nähe ihres größten Querschnitts befestigt ist.

5. Radaufhängung nach Anspruch 1, **dadurch gekennzeichnet, dass** wenigstens eine Federeinheit (20, 21) zwischen dem Fahrzeugrahmen (1) und der Blattfeder (8, 9) befestigt ist.

6. Radaufhängung nach Anspruch 5, **dadurch gekennzeichnet, dass** ein niedrigerer Abschnitt des inneren Endes (6a, 6b, 6c, 6c', 6c") des Radhalters (6, 7) an der Blattfeder (8, 9) angrenzend an die Federeinheit (20, 21) befestigt ist.

7. Radaufhängung nach Anspruch 6, **dadurch gekennzeichnet, dass** ein niedrigerer Abschnitt des inneren Endes (6a, 6b, 6c, 6c', 6c") des Radhalters (6, 7) an der Blattfeder (8, 9) auf beiden Seiten der Federeinheit (20, 21) befestigt ist.

8. Radaufhängung nach Anspruch 1, **dadurch gekennzeichnet, dass** der Radhalter (6, 7) ein Achsschenkelbolzen ist, der mit einem Radspindelhalter (36, 37) für ein lenkbares Rad versehen ist.

9. Radaufhängung nach Anspruch 1, **dadurch gekennzeichnet, dass** der Radhalter (6, 7) mit einer Radnabe für ein nicht angetriebenes Hinterrad versehen ist.

10. Fahrzeug versehen mit einer Radaufhängung (4, 5) nach Anspruch 1.

## Revendications

1. Suspension individuelle de roue (4, 5) pour un véhicule, laquelle suspension de roue (4, 5) comprenant un support de roue (6, 7) destiné à supporter une roue du véhicule, un ressort à lames (8, 9) fixé à un châssis de véhicule (1) à chaque extrémité (12, 13), et fixé entre le véhicule et le support de roue (6, 7), lequel ressort à lames (8, 9) est agencé avec son axe principal dans la direction longitudinale du véhicule, une extrémité extérieure du support de roue (6, 7) étant agencée pour soutenir une roue de véhicule, et une extrémité intérieure inférieure (6a, 6b, 6c, 6c', 6c") du support de roue (6, 7) est fixée de manière rigide au ressort à lames (8, 9), **caractérisée en ce que** le support de roue (6, 7) est agencé dans un plan vertical sensiblement transversal par rapport à un plan vertical à travers l'axe principal du ressort à lames (8, 9), le support de roue (6, 7) s'étendant depuis son extrémité intérieure inférieure (6a, 6b, 6c, 6c', 6c") vers l'extérieur dans une direction généralement horizontale, suivie par un tronçon incurvé (26, 27) s'étendant vers le haut jusqu'à une position généralement au niveau ou légèrement en dessous d'un plan horizontal à travers la surface supérieure de la poutre longitudinale adjacente (2) du châssis (1), et un tronçon supérieur (28) du support de roue (6, 7) étant fixé sur le véhicule par une tige de guidage à tige unique (30, 31) ou tige de guidage de type levier triangulaire (50) s'étendant dans une direction sensiblement transversale à partir d'une articulation à pivot (32 ; 51, 52) fixée sur la surface supérieure de ladite poutre longitudinale (2) vers une articulation à pivot (34 ; 53) située à l'extrémité supérieure du tronçon supérieur (28) du support de roue (6, 7).

2. Suspension de roue selon la revendication 1, **caractérisée en ce qu'**un tronçon inférieur de l'extrémité intérieure (6a, 6b, 6c, 6c', 6c) du support de roue (6, 7) comprend un tronçon fourchu fixé sur le ressort à lames (8, 9) de part et d'autre d'un tronçon central dudit ressort à lames (8, 9).

3. Suspension de roue selon la revendication 1, **caractérisée en ce qu'**un tronçon inférieur unique de l'extrémité intérieure (6a, 6b, 6c, 6c', 6c) du support de roue (6, 7) est fixée sur le ressort à lames (8, 9) adjacent à un tronçon central dudit ressort à lames (8, 9).

4. Suspension de roue selon la revendication 1, **caractérisée en ce que** le support de roue (6, 7) est fixé sur le ressort à lames (8, 9) sur ou à proximité de la plus grande section transversale de celui-ci.

5. Suspension de roue selon la revendication 1, **caractérisée en ce qu'**au moins une unité à ressort (20, 21) est fixée entre le châssis de véhicule (1) et le ressort à lames (8, 9).

6. Suspension de roue selon la revendication 5, **caractérisée en ce qu'**un tronçon inférieur de l'extrémité intérieure (6a, 6b, 6c, 6c', 6c) du support de roue (6, 7) est fixée sur le ressort à lames (8, 9) adjacent à l'unité à ressort (20, 21).

7. Suspension de roue selon la revendication 6, **caractérisée en ce qu'**un tronçon inférieur de l'extrémité intérieure (6a, 6b, 6c, 6c', 6c) du support de roue (6, 7) est fixé sur le ressort à lames (8, 9) des deux côtés de l'unité à ressort (20, 21).

8. Suspension de roue selon la revendication 1, **caractérisée en ce que** le support de roue (5, 7) est un poinçon équipé d'un support d'axe de roue (36, 37) pour une roue orientable.

9. Suspension de roue selon la revendication 1, **caractérisée en ce que** le support de roue (6, 7) est muni d'un moyeu de roue pour une roue arrière motrice.

10. Véhicule muni d'une suspension de roue (4, 5) selon la revendication 1.
